Europäisches Patentamt

European Patent Office

Office européen des brevets

(11) Veröffentlichungsnummer: **0 226 908 B1**

# (12) EUROPÄISCHE PATENTSCHRIFT

(45) Veröffentlichungstag der Patentschrift: **09.10.91**

(21) Anmeldenummer: **86116902.7**

(22) Anmeldetag: **04.12.86**

(51) Int. Cl.5: **G01F 11/02**, G01F 13/00, G01F 3/20

(54) **Verfahren und Vorrichtung zur Durchflussmessung bei oszillierenden Verdrängerpumpen.**

(30) Priorität: **27.12.85 DE 3546189**

(43) Veröffentlichungstag der Anmeldung:
**01.07.87 Patentblatt 87/27**

(45) Bekanntmachung des Hinweises auf die
Patenterteilung:
**09.10.91 Patentblatt 91/41**

(84) Benannte Vertragsstaaten:
**AT BE CH DE ES FR GB GR IT LI LU NL SE**

(56) Entgegenhaltungen:
**WO-A-85/01993**
**US-A- 4 255 088**

(73) Patentinhaber: **LEWA Herbert Ott GmbH + Co.**
**Ulmer Strasse 10**
**W-7250 Leonberg(DE)**

(72) Erfinder: **Fritsch, Horst**
**Hinterer Zwinger 16**
**W-7250 Leonberg(DE)**
Erfinder: **Benken, Josef**
**Schillerstrasse 44**
**W-7252 Weil der Stadt(DE)**

(74) Vertreter: **Zeitler, Giselher, Dipl.-Ing.**
**Herrnstrasse 15**
**W-8000 München 22(DE)**

EP 0 226 908 B1

**Beschreibung**

Die Erfindung betrifft ein Verfahren zur Durchflußmessung und auch Durchflußüberwachung von oszillierenden Verdrängerpumpen, insbesondere von Membranpumpen, gemäß dem Oberbegriff des Anspruchs 1. Die Erfindung betrifft außerdem eine Vorrichtung zur Durchführung dieses Verfahrens.

Oszillierende Verdrängerpumpen, d.h. also Kolbenpumpen oder Membranpumpen, fördern pulsierend. Derartige Pumpen werden meist bei kleinen Förderströmen und bei hohen Förderdrücken eingesetzt.

Die Messung solcher pulsierender Flüssigkeitsströme mit herkömmlichen Durchflußmeßgeräten ist problematisch. Dies beruht darauf, daß mechanische und elektrische Trägheitseinflüsse bei der typischen Fördercharakteristik einer solchen Verdrängerpumpe das Meßergebnis unzulässig verfälschen.

Zusätzliche Probleme ergeben sich darüber hinaus durch bestimmte Eigenschaften der zu fördernden Flüssigkeit, d.h. also beispielsweise durch hohe Viskosität, Feststoffgehalt, Gasgehalt, chemische Aggressivität usw.

Der Erfindung liegt daher die Aufgabe zugrunde, ein Verfahren sowie eine Vorrichtung zur Durchflußmessung und -überwachung von oszillierenden Verdrängerpumpen zu schaffen, mittels denen es bei geringem konstruktiven Aufwand jederzeit möglich ist, ohne Störung durch unzulässige Einflüsse den Förderstrom der Pumpe ständig zu messen und zu überwachen.

Die Merkmale der zur Lösung dieser Aufgabe geschaffenen Erfindung ergeben sich aus Anspruch 1. Vorteilhafte Ausgestaltungen hiervon sind in den weiteren Ansprüchen beschrieben.

Der Erfindung liegt der wesentliche Gedanke zugrunde, das Arbeitsprinzip der Verdrängerpumpe selbst für die Durchflußmessung und Durchflußüberwachung zu benutzen, d.h. es werden für die Durchflußmessung diejenigen physikalischen Effekte benutzt, die durch das Arbeitsprinzip der Pumpe selbst entstehen.

Dieser Erfindungsgedanke geht von der bekannten Tatsache aus, daß jede Pumpe dieser Art einen Förderzyklus aufweist, bestehend aus einer Ansaugphase, in der die Flüssigkeit in eine Pumpenkammer angesaugt wird, einer Kompressionsphase, in der die angesaugte Flüssigkeit auf Förderdruck gebracht wird, einer Förderphase, in der ein Teil der komprimierten Flüssigkeit aus der Pumpenkammer ausgestoßen wird, und schließlich einer Dekompressions- bzw. Expansionsphase, in der die in der Pumpenkammer verbliebene Flüssigkeit wieder auf Ansaugdruck gebracht wird. (siehe z.B. WO-A-8501993 oder US-A-4255088).

Hierbei benötigt jede oszillierende Verdrängerpumpe für die Kompression der Förderflüssigkeit vom Saugdruck auf den Förderdruck einen bestimmten geringen Kolbenweg, den sog. Kompressionsweg $h_K$, der in der Kompressionszeit $t_K$ zurückgelegt wird.

Ebenso wird ein Expansionsweg $h_E$ in der Expansionszeit $t_E$ benötigt, um die Förderflüssigkeit im Zylinder bzw. in der Pumpenkammer beim Zurückgehen des Kolbens vom Förderdruck auf Saugdruck zu entspannen. Da der Kolben in den Umkehrpunkten, d.h. im vorderen Totpunkt sowie im hinteren Totpunkt, für sehr kleine Wege relativ viel Zeit benötigt, entstehen auch bei sehr geringen Kompressions- und Expansionswegen bequem meßbare Zeitintervalle $t_K$ und $t_E$, was sich die Erfindung in geglückter Weise zunutze macht.

Wie schon dargelegt, muß jede oszillierende Verdrängerpumpe die angesaugte Flüssigkeit im Arbeitsraum zunächst auf den Förderdruck komprimieren, bevor das Druckventil öffnen und der eigentliche Fördervorgang beginnen kann. Der Kolben hat somit zu Beginn des Fördervorganges bereits eine Geschwindigkeit, die größer ist als 0. Dies hat zur Folge, daß nach dem Öffnen des Druckventils die Flüssigkeitsäule in der Druckleitung mit einem Geschwindigkeitssprung $\Delta w$ ruckartig beschleunigt wird.

Der gleiche Effekt tritt auch zu Beginn des Saugvorganges auf. Die Flüssigkeit im Arbeitsraum der Pumpe muß beim Zurückgehen des Kolbens zunächst vom Förderdruck auf den Saugdruck entspannt werden, bevor das Saugventil öffnen und der eigentliche Saughub beginnen kann.

Zu diesem Zeitpunkt hat der Kolben wiederum eine Geschwindigkeit, die größer ist als 0. Die Flüssigkeitssäule in der Saugleitung wird somit ebenfalls mit einem Geschwindigkeitssprung $\Delta w$ ruckartig beschleunigt.

Nach dem bekannten Gesetz von Joukowsky entsteht dadurch ein Druckstoß $\Delta p$ von der Größe

$$\Delta p = \rho \cdot a \cdot \Delta w \quad (1)$$

$\rho$ = Dichte der Förderflüssigkeit

a = Schallgeschwindigkeit in der Förderflüssigkeit

$\Delta W$ = Geschwindigkeitssprung, bezogen auf den Rohrleitungsquerschnitt.

Dieser physikalische Effekt wird erfindungsgemäß zur Bestimmung des Volumenstroms der Pumpe benutzt.

Bei der vorhandenen Kenntnis des kinematischen Gesetzes der Pumpe, das in der Regel durch die Drehzahl sowie die Triebwerkskinematik vorgegeben ist und bei dem der Hubweg h bzw. der Förderstrom $\dot{V}$

2

eine spezielle Funktion in Abhängigkeit von der Zeit darstellen, läßt sich daher eine eindeutige Beziehung zwischen dem zeitlichen Mittelwert des Förderstromes $\dot{V}_m$ und der Kompressionszeit $t_K$ bzw. der Expansionszeit $t_E$ durch einfache mathematische Zusammenhänge herstellen.

Erfindungsgemäß reduziert sich damit die meßtechnisch zu lösende Aufgabe in einfacherWeise auf die Ermittlung der Kompressionszeit $t_K$ und/oder der Expansionszeit $t_E$. Der zeitliche Druckverlauf im Pumpenzylinder weist beim Öffnen des Druckventils stets einen Druckstoß nach oben, d.h. in positiver Richtung auf, während beim Öffnen des Saugventils ein Druckstoß nach unten, d.h. in negativer Richtung vorliegt. Beide Druckstöße regen Schwingungsvorgänge an, die jedoch in der Regel durch Dämpfung schnell abklingen und bis zur Beendigung des Druckhubes bzw. Saughubes nur noch geringe Amplituden haben.

Die Kompressionszeit $t_K$ läßt sich ausdrücken als Differenz zwischen dem Zeitpunkt des positiven Druckstoßes $t_2$ und des hinteren Kolbentotpunktes $t_1$, d.h. also

$$t_K = t_2 - t_1,$$

während die Expansionszeit $t_E$ sich als Differenz zwischen dem Zeitpunkt des negativen Druckstoßes $t_4$ und des vorderen Kolbentotpunktes $t_3$, d.h. also

$$t_E = t_4 - t_3,$$

ausdrücken läßt.

Erfindungsgemäß lassen sich die vorerwähnten Totpunktzeiten $t_1$, $t_3$ einfach durch Kontaktgeber oder Initiatoren an der drehenden Kurbelwelle des Pumpentriebwerkes messen. Der Zeitpunkt der positiven bzw. negativen Druckstöße $t_2$, $t_4$ kann hierbei durch bekannte Drucksensoren registriert werden.

Es wird demgemäß mit der Erfindung ein Verfahren bzw. eine Vorrichtung geschaffen, bei dem die Durchflußmessung und auch -überwachung der Pumpe dadurch erfolgt, daß als Grundlage für die Messung das Arbeitsprinzip der Pumpe selbst verwendet wird, wobei der mathematisch eindeutige Zusammenhang zwischen der Verdrängerkinematik und der Kompressions- bzw. Expansionszeit des Verdrängers verwertet wird. Dies erfolgt vorzugsweise über einen Mikrocomputer. Hierbei wird die Kompressionszeit $t_K$ bzw. die Expansionszeit $t_E$ als Zeitdifferenz zwischen der hinteren bzw. der vorderen Kolbentotlage und der Ankoppelungsdruckspitze bei Beginn des Fördervorganges bzw. des Saugvorganges gemessen, was vorteilhafterweise mittels Sensoren erfolgen kann.

Die Erfindung wird im folgenden anhand der Zeichnung näher erläutert. Es zeigen:

Fig. 1: Im Diagramm schematisch den Kurvenverlauf charakteristischer Daten beim Druckhub sowie Saughub einer Verdrängerpumpe und

Fig. 2: schematisch die Anwendung der Erfindung bei einer Membranpumpe bzw. bei einer Kolbenpumpe.

Wie aus der Zeichnung deutlich ersichtlich, werden das Verfahren und die Vorrichtung gemäß der Erfindung im einzelnen derart betrieben, daß der hintere Totpunkt $t_1$ des Pumpenhubes durch einen Sensor 1, z. B. einen Näherungsinitiator oder Schlitzinitiator, und der Druck im Pumpenzylinder durch einen Drucksensor 2, z.B. einen piezoelektrischen Druckaufnehmer, gemessen werden. Das Taktsignal startet beim ersten Pumpenhub den internen Timer eines Mikrocomputers 3. Durch Messung der Laufzeit $t'_1 - t_1$ wird die Hubfrequenz bestimmt, und es wird durch Teilung der Wert $t_3$ folgendermaßen ermittelt:

$$t_3 - t_1 = \tfrac{1}{2}(t'_1 - t_1).$$

Der Drucksensor 2 mißt den zeitlichen Druckverlauf $p(t)$ im Pumpenzylinder. Dieses Analogsignal wird über einen Analog-Digital-Wandler 4 dem Mikrocomputer 3 eingegeben.

Im Mikrocomputer 3 werden der Systemdruck (= Förderdruck) $p_D$ und der Saugdruck $p_S$ gespeichert, und zwar jeweils bei Druckhubende zum Zeitpunkt $t_3$ bzw. bei Saughubende zum Zeitpunkt $t_1$.

Der Druckstoßzeitpunkt $t_2$ bei Förderbeginn wird aus der Bedingung $p > p_D$ ermittelt, der Druckstoßzeitpunkt $t_4$ bei Saugbeginn aus der Bedingung $p < p_S$.

Weitere Eingabegrößen, die im Festwertspeicher des Mikrocomputers 3 abgelegt werden, sind die Pumpenspezifischen Daten, wie Bewegungsgesetz des Pumpenkolbens und Kolbendurchmesser.

In einem Programm werden die Verknüpfungsbedingungen zwischen den Meßsignalen und den pumpenspezifischen Daten festgelegt. Der Mikrocomputer 3 errechnet danach in vorgegebenen Zeitintervallen den auf Systemdruck $P_D$ bezogenen Volumenstrom $\dot{V}_D$ und den auf Saugdruck bezogenen Volumenstrom $\dot{V}_s$, ebenso den Pumpenfördergrad X.

Für den Fall, daß das kinematische Gesetz des Pumpenkolbens eine harmonische Bewegung ist, d.h.

nach einer Sinuskurve verläuft, ergeben sich für das Rechenprogramm zur Ermittlung des Fördergrades X und der Volumenströme $\dot{V}_D$ und $\dot{V}_s$ folgende Bestimmungsgleichungen:

$$X = \frac{1}{2}\left(1 + \cos\pi\frac{t_4 - t_3}{t_3 - t_1}\right)$$

$$\dot{V}_s = \frac{A_K \cdot h}{4} \cdot \frac{1 + \cos\pi\dfrac{t_4 - t_3}{t_3 - t_1}}{t_3 - t_1}$$

$$\dot{V}_D = \frac{A_K \cdot h}{4} \cdot \frac{1 + \cos\pi\dfrac{t_2 - t_1}{t_3 - t_1}}{t_3 - t_1}$$

wobei $A_k$ = Kolbenfläche

In das Rechenprogramm werden noch Kriterien eingegeben, welche dazu dienen, bei mangelhafter Pumpenfunktion eine Störung zu signalisieren.

So liegt im Fall

$$\frac{\dot{V}_s}{\dot{V}_D} < 1$$

eine Ventilstörung vor, im Fall

$$\frac{\dot{V}_s}{\dot{V}_D} > 1 + \dot{C}(P_D - P_s)$$

eine Ventilstörung oder Gaseinschlüsse. Störfälle werden durch ein Ausgangssignal am Mikrocomputer 3 gemeldet.

Weitere Ausgangsdaten, die z. B. an einem Display abgerufen werden können, sind:
Volumenstrom $\dot{V}_s$ und $\dot{V}_D$
Fördergrad X
Systemdruck $P_D$
Saugdruck $P_s$

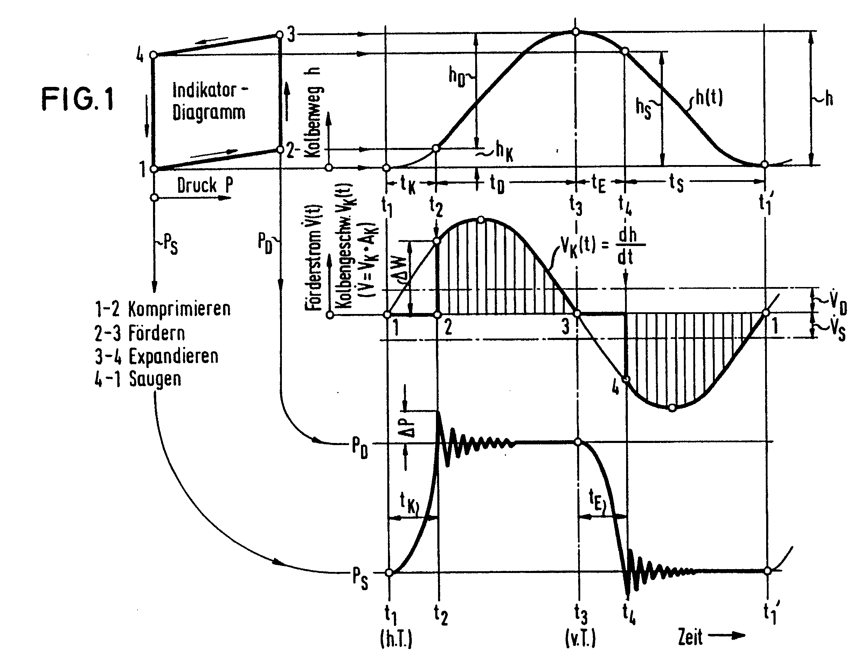

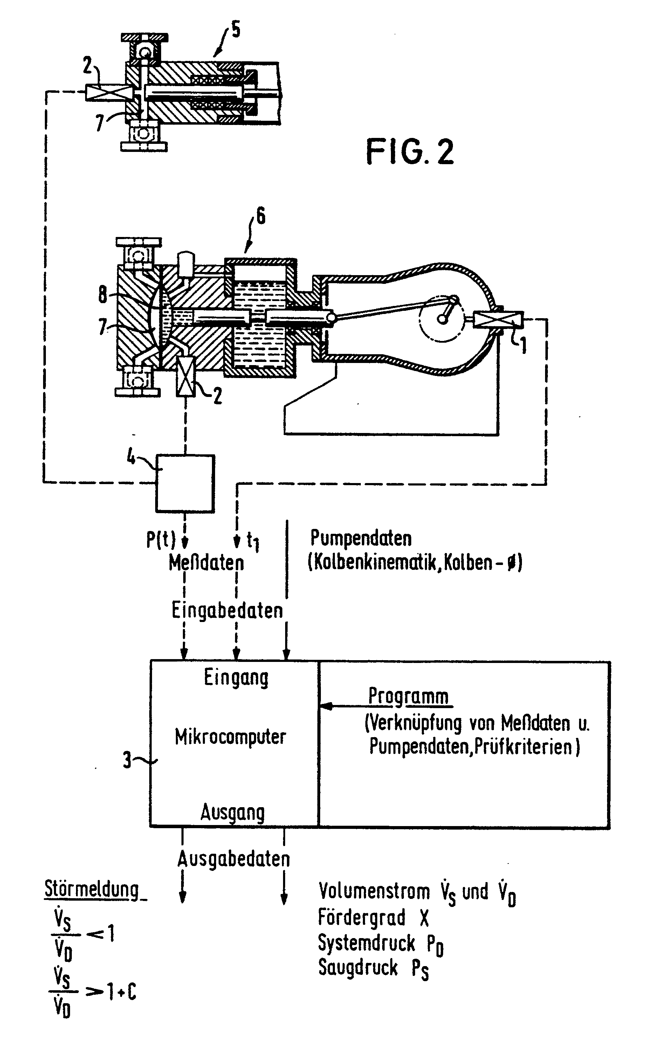

Eingegeben werden der Druckverlauf im Pumpenzylinder p(t) vom Drucksensor 2 und das Zeitsignal $t_1$ vom Sensor 1. Die pumpenspezifischen Daten werden mittels Tastatur eingegeben. Hinsichtlich der weiteren Erläuterung der Erfindung wird ausdrücklich Bezug genommen auf Fig. 1 und 2 der Zeichnung, die in sich selbst verständlich ist und deutlich die Erfindung selbst sowie die Art und Weise der Anwendung zur Durchflussmessung- und -überwachung bei oszillierenden Verdrängerpumpen zeigt. Dabei kann die Anwendung, wie aus Fig. 2 ersichtlich, sowohl bei einer Membranpumpe (unterer Teil von Fig. 2) als auch bei einer Kolbenpumpe (oberer Teil von Fig. 2) erfolgen. Hierbei ist der Drucksensor 2, der den Druck im Pumpenzylinder mißt, bei der Kolbenpumpe 5 im Förderraum 7, jedoch bei der Membranpumpe 6 zweckmäßigerweise im Hydraulikraum 8 (= Ölraum) angeordnet. Letzteres erbringt den Vorteil, daß sich von der chemischen Beständigkeit her keinerlei Probleme bezüglich einer etwaigen Anfälligkeit des Drucksensors 2 ergeben, da dieser aufgrund seiner Anordnung im Hydraulikraum 8 stets dem gleichen nichtaggressiven Medium, nämlich üblicherweise Öl, unterworfen ist und somit nicht einer etwaigen

EP 0 226 908 B1

Aggressivität des im Förderraum 7 befindlichen Fördermediums ausgesetzt ist.

**Patentansprüche**

1.  Verfahren zur Durchflußmessung sowie Durchflußüberwachung von oszillierenden Verdrängerpumpen, insbesondere von Membranpumpen,
    **dadurch gekennzeichnet,**
    daß zur Ermittlung des tatsächlich geförderten Volumenstroms das Auftreten eines Druckstoßes im Pumpenzylinder zu Beginn des Saugvorganges und/oder zu Beginn des Fördervorganges verwendet und zu diesem Zweck mittels Sensoren der Zeitpunkt des Druckstoßes zu Beginn des Saughubes und/oder zu Beginn des Druckhubes sowie die Zeitpunkte der Bewegungsumkehr des Pumpenkolbens gemessen werden, worauf sodann aus diesen Zeitpunkten über das kinematische Bewegungsgesetz des Kolbens der tatsächlich geförderte Volumenstrom der Pumpe berechnet wird.

2.  Verfahren nach Anspruch 1,
    **dadurch gekennzeichnet,**
    daß die Kompressionszeit ($t_K$) bzw. Expansionszeit ($t_E$) als Zeitdifferenz zwischen der hinteren bzw. der vorderen Totpunktlage des Verdrängers und der Ankoppelungsspitze bei Beginn des Fördervorganges bzw. des Saugvorganges gemessen bzw. ermittelt wird.

3.  Verfahren nach Anspruch 1 oder 2,
    **dadurch gekennzeichnet,**
    daß der tatsächlich geförderte Volumenstrom der Pumpe aus den ermittelten Meßwerten mittels eines Mikrocomputers berechnet wird.

4.  Vorrichtung zur Durchführung des Verfahrens nach einem der Ansprüche 1 bis 3, mit einer Durchflußmeßeinrichtung, die aus Sensoren zur Ermittlung der Zeitpunkte der Bewegungsumkehr des Pumpenkolbens, einem Drucksensor zur Ermittlung des Drucks im Pumpenzylinder und einer Signalverarbeitungsschaltung besteht, und die derart ausgestaltet ist, daß mittels ihr der Zeitpunkt des Druckstoßes zu Beginn des Saughubes und/oder zu Beginn des Druckhubes sowie die Zeitpunkte der Bewegungsumkehr des Pumpenkolbens gemessen werden, um hieraus über das kinematische Bewegungsgesetz des Kolbens den tatsächlich geförderten Volumenstrom der Pumpe zu berechnen.

**Claims**

1.  A method for flow metering and for flow supervision of oscillating displacement pumps, in particular membrane pumps, characterised in that for determination of the actual supplied flow volume the occurrence of a pressure surge in the pump cylinder at the beginning of the suction process and/or at the beginning of the delivery process is used, and to this end the timing of the pressure surge at the beginning of the suction stroke and/or at the beginning of the pressure stroke as well as the timing of the return motion of the pump piston are measured by means of sensors, and the actual supplied flow volume of the pump is then calculated from this timing by means of the kinematic law of motion of the piston.

2.  A method according to claim 1, characterised in that the compression time ($t_k$) or expansion time ($t_E$) is measured or determined as a time difference between the rearward or forward dead point position of the displacer and the connection peak at the start of the delivery process or of the suction process.

3.  A method acccording to claim 1 or 2, characterised in that the actual supplied flow volume of the pump is calculated from the determined measurement values by means of a microprocessor.

4.  Apparatus for carrying out the method according to any of claims 1 to 3, with a flow metering device which consists of sensors for determination of the timing of the return motion of the pump piston, a pressure sensor for determination of the pressure in the pump cylinder and a signal processing circuit, and which is arranged in such a way that by means of it the timing of the pressure surge at the beginning of the suction stroke and/or at the beginning of the pressure stroke as well as the timing of the return motion of the pump piston are measured, in order to calculate from this the actual supplied flow volume of the pump by means of the kinematic law of motion of the piston.

**Revendications**

1. Procédé pour mesurer ainsi que surveiller le débit de pompes volumétriques oscillantes, en particulier de pompes à diaphragme, caractérisé en ce que l'apparition d'un coup de bélier dans le cylindre de la pompe au début du processus d'aspiration et/ou au début du processus de refoulement est utilisée pour la détermination du volume de fluide effectivement refoulé et en ce qu'à cette fin l'instant du coup de bélier au début de la course d'aspiration et/ou au début de la course de refoulement ainsi que les instants d'inversion du mouvement du piston de pompe sont mesurés au moyen de détecteurs, après quoi le débit en volume de fluide effectivement refoulé par la pompe est alors calculé, sur la base de ces instants, par l'intermédiaire de la loi cinématique du mouvement du piston.

2. Procédé selon la revendication 1, caractérisé en ce que le temps de compression ($t_K$) et le temps d'expansion ($t_E$) sont mesurées ou déterminées en tant que différence de temps entre respectivement la position de point mort postérieur ou la position de point mort antérieur de l'organe déplaceur et la pointe de couplage au début respectivement du processus de refoulement et du processus d'aspiration.

3. Procédé selon la revendication 1 ou 2, caractérisé en ce que le débit en volume de fluide effectivement refoulé par la pompe est calculé, au moyen d'un microordinateur, à partir des valeurs de mesure déterminées.

4. Dispositif pour la mise en oeuvre du procédé selon l'une quelconque des revendications précédentes, comprenant un débitmètre qui est constitué de détecteurs pour déterminer les instants de l'inversion du mouvement du piston de pompe, d'un capteur de pression pour déterminer la pression régnant dans le cylindre de pompe et d'un circuit de traitement de signaux et est réalisé de telle manière qu'au moyen de lui sont mesurés l'instant du coup de bélier au début de la course d'aspiration et/ou au début de la course de refoulement ainsi que les instants d'inversion du mouvement du piston de pompe, afin de calculer à partir de ces mesures, par l'intermédiaire de la loi cinématique du mouvement du piston, le débit en volume de fluide effectivement refoulé par la pompe.

FIG.1

**Indikator - Diagramm**

Kolbenweg  h

$h(t)$

$h_D$

$h_S$

$h$

$h_K$

$t_K$  $t_D$  $t_E$  $t_S$

Druck P

1-2 Komprimieren
2-3 Fördern
3-4 Expandieren
4-1 Saugen

$\sim P_S$

$P_D$

Förderstrom $\dot{V}(t)$

Kolbengeschw. $V_K(t)$
($\dot{V} = V_K \cdot A_K$)

$V_K(t) = \dfrac{dh}{dt}$

$\Delta W$

$\dot{V}_D$

$\dot{V}_S$

$\Delta P$

$P_D$

$t_{K)}$

$t_{E)}$

$P_S$

$t_1$
(h.T.)

$t_2$

$t_3$
(v.T.)

$t_4$

$t_1'$

Zeit ⟶

EP 0 226 908 B1

FIG. 2

P(t) ↓     ↓ $t_1$     Pumpendaten
Meßdaten                (Kolbenkinematik, Kolben - ∅)

Eingabedaten

| Eingang | Programm |
|---|---|
| | (Verknüpfung von Meßdaten u. Pumpendaten, Prüfkriterien) |
| Mikrocomputer | |
| Ausgang | |

Ausgabedaten

Störmeldung     ↓          ↓     Volumenstrom $\dot{V}_S$ und $\dot{V}_D$

$$\frac{\dot{V}_S}{\dot{V}_D} < 1$$

Fördergrad X
Systemdruck $P_D$
Saugdruck $P_S$

$$\frac{\dot{V}_S}{\dot{V}_D} > 1 + C$$